(19) Europäisches Patentamt
European Patent Office
Office européen des brevets

(11) Publication number: **0 398 698 B1**

(12) # EUROPEAN PATENT SPECIFICATION

(45) Date of publication of patent specification: **06.12.95**

(51) Int. Cl.[6]: **C08F 4/656**, C08F 10/00

(21) Application number: **90305313.0**

(22) Date of filing: **16.05.90**

(54) **Process for producing olefin polymer.**

(30) Priority: **17.05.89 JP 121580/89**

(43) Date of publication of application:
**22.11.90 Bulletin 90/47**

(45) Publication of the grant of the patent:
**06.12.95 Bulletin 95/49**

(84) Designated Contracting States:
**DE FR GB NL**

(56) References cited:
**EP-A- 0 268 274**

(73) Proprietor: **Mitsubishi Chemical Corporation**
**5-2, Marunouchi 2-chome**
**Chiyoda-ku**
**Tokyo (JP)**

(72) Inventor: **Suga, Yoshinori**
**242-61 Kogasaka**
**Machida-shi,**
**Tokyo (JP)**
Inventor: **Maruyama, Yasuo**
**4-18-24 Soshigaya**
**Setagaya-ku,**
**Tokyo (JP)**
Inventor: **Shimizu, Fumihiko**
**28-6 Umegaoka,**
**Midori-ku**
**Yokohama-shi,**
**Kanagawa-ken (JP)**

(74) Representative: **Woods, Geoffrey Corlett et al**
**J.A. KEMP & CO.**
**14 South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for producing an olefin polymer by the use of a novel solid catalyst component, and to said catalyst component. More particularly, the present invention relates to a process for producing a polymer of an $\alpha$-olefin such as ethylene, propylene, butene-1, 4-methylpentene-1, and 3-methylbutene-1, particularly a polymer of an $\alpha$-olefin having not less than three carbon atoms by the use of a catalyst which comprises a novel catalyst component supported on a carrier, an organometallic compound of a metal of Group I, II or III of the Periodic Table, and an electron donating compound. The catalyst used in the process of the present invention has excellent polymerization activity and stereospecificity, shows only a very slight lowering in polymerization activity and stereospecificity during long-term polymerization, and is capable of producing a polymer having an excellent particle property.

Many proposals have heretobefore been made regarding the production of a catalyst having a high activity and capable of producing a polymer of high stereospecificity from an $\alpha$-olefin of at least three carbon atoms. Most of the catalysts proposed are not fully satisfactory in terms of polymerization activity and stereospecificity and also in particle property of the produced polymer. Further improvement, therefore, in the catalyst has been desired.

The present inventors have already proposed in JP-A-64-54007 (1989) a process for producing a catalyst having excellent polymerization activity and stereospecificity, and capable of forming a polymer having an excellent particle property, which process comprises preparing a solid catalyst component obtained by contact treatment of the reaction product of a magnesium alkoxide, a titanium alkoxide and a silicon alkoxide with a halogen-containing titanium compound and an electron donating compound and combining the solid catalyst component with an organometallic compound of a metal of Group I, II or III of the Periodic Table, and optionally with an electron donating compound. This catalyst, however, has a disadvantage in that it causes a serious lowering of polymerization activity during long-term polymerization (3-hour polymerization, for example). A large lowering in polymerization activity during long-term polymerization causes low productivity.

In the circumstances described above, the present inventors have made a continuous study to find a catalyst system having excellent polymerization activity and stereospecificity, showing only very slight lowering in polymerization activity and stereospecificity during long-term polymerization, and capable of forming an olefin polymer having an excellent particle property. A solid catalyst component which meets this purpose has now been found.

The present invention provides a process for producing an olefin polymer, which comprises polymerizing an olefin or copolymerizing olefins in the presence of a catalyst comprising:

(A) a solid catalyst component obtained by reacting with heating a magnesium compound ($a_1$) represented by the following formula:

$$Mg(OR^1)_n(OR^2)_{2-n}$$

wherein $R^1$ and $R^2$ independently represent an alkyl group, an aryl group or an aralkyl group and n represents a number satisfying $2 \geqq n \geqq 0$, a titanium compound ($a_2$) represented by the following formula:

$$Ti(OR^3)_4$$

wherein $R^3$ represents an alkyl group, an aryl group or an aralkyl group, a silicon compound ($a_3$) represented by the following formula:

$$Si(OR^4)_4$$

wherein $R^4$ represents an alkyl group, an aryl group or an aralkyl group, and optionally, a compound ($a_4$) represented by the following formula:

$$R^7OH$$

wherein $R^7$ represents an alkyl group, an aryl group or an aralkyl group, and subjecting the resultant reaction product (a) to contact treatment with a halogen-containing titanium compound (b) represented by the following formula:

$$TiX_m(OR^5)_{4-m}$$

wherein X represents a halogen, $R^5$ represents an alkyl group, an aryl group or an aralkyl group, and m represents a number satisfying $4 \geqq m > 0$.

and an electron donating compound (c) represented by the following formula:

$$R^6{}_p(COO)_qM_rY_s$$

wherein $R^6$ represents an alkyl group, an aryl group or an aralkyl group, M represents Ti, B or Ge, Y represents a hydrocarbon group or an inorganic anion, q,r and s respectively represents a number not less than 0 satisfying the following equation:

$$rx = ys + q$$

wherein x represents the valence of M and y represents the valence of Y, and p represents a number satisfying p≧1;

(B) an organometallic compound of a metal of Group IA, IIA or IIIA of the Periodic Table; and

(C) an electron donating compound.

The present invention also provides a catalyst comprising the solid catalyst component (A), the organometallic component (B) and the electron donating compound (C) as defined above.

In the accompanying drawing:

Fig 1 shows a flow chart of the production of the catalyst used in the process of the present invention.

The magnesium compound ($a_1$) represented by the formula:

$Mg(OR^1)_n(OR^2)_{2-n}$

which is used in the present invention may include a dialkoxy magnesium, a diaryloxy magnesium and an alkyloxyaryloxy magnesium, specifically, $Mg(OCH_3)_2$, $Mg(OC_2H_5)_2$, $Mg(OC_3H_7)_2$, $Mg(OC_4H_9)_2$, $Mg(OC_6H_5)_2$, $Mg(OCH_2C_6H_5)_2$, $Mg(OC_2H_5)(OC_4H_9)$, $Mg(OC_6H_5)(OC_4H_9)$, $Mg(OC_2H_5)(OC_6H_5)$ and $Mg(OC_6H_4CH_3)$. These magnesium compounds may be used singly or in combination.

The titanium compound ($a_2$) represented by the formula:

$Ti(OR^3)_4$

may include $Ti(OCH_3)_4$, $Ti(OC_2H_5)_4$, $Ti(OC_3H_7)_4$, $Ti(OC_4H_9)_4$, $Ti(OC_6H_5)_4$ and $Ti(OCH_2C_6H_5)_4$. These titanium compounds may be used alone or in combination.

The silicon compound ($a_3$) represented by the formula:

$Si(OR^4)_4$

may include $Si(OCH_3)_4$, $Si(OC_2H_5)_4$, $Si(OC_3H_7)_4$, $Si(OC_4H_9)_4$, $Si(OC_6H_5)_4$ and $Si(OC_6H_4CH_3)_4$. These silicon compounds may be used alone or in combination.

The compound ($a_4$) represented by the formula:

$R^7OH$

may include alcohols such as $C_2H_5OH$, i-$C_3H_7OH$, n-$C_3H_7OH$, n-$C_4H_9OH$, i-$C_4H_9OH$, n-$C_6H_{13}OH$, n-$C_8H_{17}OH$, n-$C_4H_9CH(C_2H_5)CH_2OH$ and $C_6H_5CH_2OH$, and phenols such as phenol, cresol, xylenol and butyl phenol.

It is preferred that at least one of the magnesium compound, the titanium compound, the silicon compound and the compound of the formula $R^7OH$ has an aryloxy group.

The method for obtaining the reaction product (a) of the three or four compounds, i.e., the magnesium compound ($a_1$), the titanium compound ($a_2$), the silicon compound ($a_3$), and optionally the compound ($a_4$) of the formula $R^7OH$, may include a method wherein ($a_1$), ($a_2$), ($a_3$), and optionally ($a_4$) are subjected to simultaneous contact reaction, a method wherein ($a_4$) is optionally reacted after the reaction of ($a_1$), ($a_2$) and ($a_3$), a method wherein ($a_3$) and optionally ($a_4$) are reacted after the reaction of ($a_1$) and ($a_2$), and a method wherein ($a_3$) is reacted after ($a_1$), ($a_2$) and optionally ($a_4$). Thus, there is no limitation in the order of the compounds to be reacted. In the reaction, an inert hydrocarbon solvent such as hexane, heptane, pentane, butane, toluene or xylene may be used. The reaction temperature is preferably 60 to 200°C, more preferably 100 to 150°C, and the reaction time is generally about 0.5 to 4 hours.

The molar ratio of the compounds to be reacted is usually 0.05 to 4 preferably 0.2 to 1 for $Ti(OR^3)_4$, usually 0.1 to 5 preferably 0.2 to 2 for $Si(OR^4)_4$, and usually 0.1 to 5 preferably 1 to 3 for $R^7OH$ optionally used, based on one mol of $Mg(OR^1)_n(OR^2)_{2-n}$.

The reaction product of the magnesium compound ($a_1$), the titanium compound ($a_2$), the silicon compound ($a_3$), and the compound ($a_4$) optionally used, can be obtained in a liquid state depending on the ratio of ($a_1$), ($a_2$), ($a_3$) and optional ($a_4$). A particularly desirable result, however, can be obtained when a slurry reaction product containing a solid product is used.

The solid catalyst component (A) is obtained by subjecting the reaction product (a) which is obtained as described above to contact treatment with the halogen-containing titanium compound (b) and the electron donating compound (c) in the presence or absence of an inert hydrocarbon solvent such as hexane, heptane, pentane or toluene.

The halogen-containing titanium compound may include $TiCl_4$, $TiBR_4$, $TiI_4$ or an alkoxyhalogenotitanium. Of these compounds, $TiCl_4$ and the alkoxyhalogenotitanium are preferably used.

In the electron donating compound (c) $R^6$ is preferably an aryl group. Specifically, the electron donating compound (c) includes a carboxylic acid derivative such as o-$C_6H_4(COOBCl_2)_2$, (o-$C_6H_4)_3(COO)_6B_2$, o-$C_6H_4[COOGe(CH_3)_3]_2$ or o-$C_6H_4(COO)_2TiCl_2)$.

In the present invention, the contact treatment of components (a), (b) and (c) is usually carried out by the following methods:

(i) (a) is treated with (b) and (c),

(ii) (a) and (b) are previously subjected to contact treatment, and then treated with (c), and

(iii) (a) and (c) are previously subjected to contact treatment, and then treated with (b). There is no limitation in the order of (a), (b) and (c) to be treated. However, methods (i) and (ii) are preferred to method (iii). The treatment with (b) and/or (c) may be preferably repeated twice or more.

After the contact treatment of (a), (b) and (c), the resultant product is generally washed with an inert hydrocarbon solvent or halogenated hydrocarbon such as hexane, heptane, pentane, butane, toluene and chlorobenzene to remove the component soluble in the solvent, thereby obtaining the solid catalyst component (A).

The molar amounts of components (b) and (c) to be used in the production process of the catalyst based on one mol of the magnesium compound in the component (a) are:

Halogen-containing titanium compound (b): usually 0.1 to 100 mol, preferably 1 to 40 mol, and

Electron donating compound (c): usually 0.01 to 10 mol,

preferably 0.01 to 1 mol.

Furthermore, it is preferred to selected the amount of each of components (a), (b) and (c) so that the content of titanium in the solid catalyst component (A) is within the range of 0.1 to 10 weight %, preferably 0.5 to 5 weight %.

The temperature for the contact treatment of components (a), (b) and (c) is usually in the range of -70 to 200 °C, preferably -30 to 150 °C. More specifically, in the case where components (a) an (b) are subjected to contact treatment and then further treated with component (c), a highly satisfactory result can be obtained when the contact treatment of components (a) and (b) is carried out at a temperature of -70 ° to 50 °C, preferably -30 to 30 °C, and the subsequent treatment with component (c) is carried out at a temperature of 50 to 200 °C, preferably 70 to 150 °C. Also, in the case where components (a), (b) and (c) are simultaneously subjected to contact treatment, a highly satisfactory result can be obtained when the treatment is carried out at a temperature of -70 to 50 °C, preferably -30 to 30 °C, and then the product is heated to a temperature of 50 to 200 °C, preferably 70 to 150 °C.

When the contact treatment of components (a) and (b) or (a), (b) and (c) is carried out at a temperature as low as described above, the entire reaction mixture is easily allowed to become a homogeneous liquid. By heating this homogeneous liquid mixture to precipitate a solid matter, a solid catalyst component (A) having an excellent particle property can be obtained.

The contact treatment of components (a), (b) and (c) is carried out in the present or absence of an inert solvent such as hexane, heptane, pentane, butane, toluene and chlorobenzene. The time for this treatment is usually about 0.5 to 6 hours.

The olefin polymer is produced by polymerizing an olefin or copolymerizing olefins in the presence of a catalyst obtained by mixing the solid catalyst component (A) obtained as described above with the organometallic compound (B) of a metal of Group I, II or III of Periodic Table and the electron donating compound (C).

The organometallic compound (B) of a metal of Group I, II or III of Periodic Table used in the catalyst may include an organolithium compound, an organopotassium compound, an organomagnesium compound or an organoaluminum compound. Of these compounds, a compound represented by the following formula:

$AlR^8{}_{m'}X_{3-m'}$

wherein $R^8$ represents a hydrocarbon group of 1 to 20 carbon atoms, preferably an aliphatic hydrocarbon group of 1 to 20 carbon atoms, X represents a halogen and m' represents a number in the range of 2 to 3, is preferred. Examples of the compound are $Al(C_2H_5)_3$, $Al(n\text{-}C_3H_7)_3$, $Al(i\text{-}C_4H_9)_3$, $Al(n\text{-}C_6H_{13})_3$, $Al(n\text{-}C_8H_{17})_3$, $Al(CH=CH_2)(C_2H_5)_2$ and $Al(C_2H_5)_2Cl$. A trialkylaluminum is preferably used.

The electron donating compound (C) may include a phosphorus-containing compound, an oxygen-containing compound, a sulfur-containing compound, a nitrogen-containing compound and a silicon-containing compound. Of these compounds, a nitrogen-containing compound, an oxygen-containing compound and a silicon-containing compound are preferably used.

The nitrogen-containig compound may include amines or derivatives thereof such as $(C_2H_5)_3N$, $H_2N(CH_2)_2NH_2$, $(i\text{-}C_3H_7)_2NH$, $(t\text{-}C_4H_9)_2NH$, pyridine and piperidine, and nitroso compounds such as N-oxides of tertiary amines, pyridines or quinolines. Of these compounds, a piperidine derivative such as 2,2,6,6-tetramethylpiperidine is preferably used.

The oxygen-containg compound may include a compound represented by the following formulae:

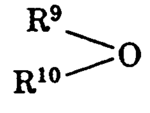
,
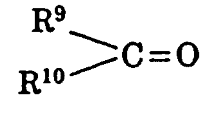

and $R^9(COOR^{10})_k$ wherein $R^9$ and $R^{10}$ independently represent a hydrocarbon group which may be substituted with an alkyl group, a hydroxyl group or an alkoxyl group, or $R^9$ and $R^{10}$ may combine to form a cyclic group, and k represents a

number from 1 to 3. Specifically, there are exemplified ethers such as diethyl ether, dipropyl ether, diethylene glycol, ethylene oxide; propylene oxide, tetrahydrofuran and 2,2,5,5-tetramethyltetrahydrofuran, ketones such as acetone, diethyl ketone, methyl ethyl ketone, methyl isobutyl ketone and phenyl propyl ketone, carboxylic esters such as ethyl phenylacetate, methyl benzoate, methyl toluate, methyl anisate, ethyl anisate, methyl ethoxybenzoate and ethyl cinnamate, cyclic esters such as t-butylolactone, and $\beta$-trimethoxysilylethyl benzoate. Ethers or esters of aromatic carboxylic acid are preferably used.

The silicon-containing compound may include a compound represented by the following formula:

$$R^{11}{}_nX_mSi(OR^{12})_{4-n-m}$$

wherein $R^{11}$ and $R^{12}$ independently represent a hydrocarbon group which may be substituted with an alkyl group, X represents a hydrogen atom or halogen atom, and each of n and m represents a number from 0 to 4. Examples of the silicon-containing compound are $(C_2H_5)_2Si(OCH_3)_2$, $C_6H_5Si(OCH_3)_3$, $(C_6H_5)_2Si(OCH_3)_2$, $C_6H_5Si(OC_2H_5)_3$, $C_6H_5SiCl(OCH_3)_2$, $C_6H_5SiH(OCH_3)_2$ and $Si(OC_2H_5)_4$. Of these compounds, a hydrocarbylalkoxysilane such as $(C_6H_5)_2Si(OCH_3)_2$ and $C_6H_5Si(OC_2H_5)_3$ is preferred.

When a dicarboxylic acid derivative is used as the electron donating compound (c), a nitrogen-containing compound or a silicon-containing compound is preferably used as the electron donating compound (C), and more preferably a piperidine derivative is used.

The solid catalytic component (A), the organometallic compound (B) and the electron donating compound (c) are mixed in a conventional manner in such a ratio that the molar ratio of titanium in the solid catalyst component (A), the organometallic compound (B) and the electron donating compound (C) is generally 1:3 to 1000:0.1 to 100, preferably 1:10 to 300:1 to 50.

As the olefin which is subjected to polymerization or copolymerization, may be mentioned ethylene, propylene, but-1-ene, 3-methylbut-1-ene, and 4-methylpentene-1. An $\alpha$-olefin having not less than three carbon atoms, especially propylene, is preferred. The process of the present invention is preferably applied to random copolymerization and block copolymerization as well as to homopolymerization.

As the polymerization method, there may be mentioned slurry polymerization wherein an inert hydrocarbon such as hexane, heptane, toluene, pentane and butane, a mixture thereof and a liquefied $\alpha$-olefin which is subjected to polymerization are used as the solvent; bulk polymerization; and gas phase polymerization.

The polymerization temperature is generally 50 to 100°C, preferably 60 to 90°C. As for the polymerization pressure, there is no specific limitation. However, it is preferably from atmospheric pressure to 100 atm. Hydrogen may be present in the polymerization system as a molecular weight modifier.

In the process of the present invention, any techniques usually employed in conventional polymerization or copolymerization of the respective $\alpha$-olefin may be also applied. For example, there is mentioned a method wherein the $\alpha$-olefin is subjected to prepolymerization using three catalyst components (A), (B) and (C) or two catalyst components (A) and (B), and then, subjected to main polymerization at a temperature higher than the prepolymerization temperature. In this method, the amount of prepolymerization is about 0.1 to 100g based on 1g of the solid catalyst component (A); practically, 1 to 3g is sufficient. The catalyst component used in the prepolymerization may be used in the main polymerization after or without washing with an inert hydrocarbon such as hexane.

The present invention will now be further described in the following Examples.

In the following Examples, the term "polymerization activity" (indicated by K) refers to the amount (g) of the polymer produced per one hour, per 1kg/cm$^2$ of $\alpha$-olefin pressure and per 1g of the solid catalyst component (A). The term "catalytic efficiency" (indicated as CE) refers to the amount (g) of the polymer produced per 1g of the solid catalyst component (A).

The term "isotactic index" (indicated as II) refers to the residual amount (% by weight) after 6-hour extraction in a modified Soxhlet's extractor with boiling n-heptane.

The bulk density (indicated as $\rho_B$ in g/cc) was determined in accordance with Japanese Industrial Standard (JIS) K-6721. Melt flow index (MFI) was determined in accordance with ASTM-D-1238.

The particle size distribution of the polymer was determined with standard sieves made by Mitamura Riken K.K.

## EXAMPLE 1:

(1) Preparation of the solid catalytic component (A)

A 500 ml flask equipped with a stirrer and a thermometer was thoroughly replaced with refined $N_2$ gas and under refined $N_2$ seal, 5 g of commercially available $Mg(OC_2H_5)_2$ was placed therein, and then, were added 7.4 g of $Ti(OC_4H_9)_4$ and 4.6 g of $Si(OC_2H_5)_4$. The contents were stirred and heated. When the temperature was raised to 130°C, a toluene solution of 8.2g of phenol was

added and the contents allowed to react at 130°C for one hour to obtain a yellow slurry reaction product (a).

After the reaction, refined toluene was added to the reaction product in such an amount that the concentration of Mg was 0.5 mmol/ml of toluene, then the mixture was cooled to -20°C and 25g of $TiCl_4$ was added. After the addition, the entire reaction mixture changed to a homogeneous liquid state. The temperature was gradually raised to 110°C and 0.75g of o-$(C_6H_4)_3(COO)_6B_2$ was added, then kept at 110°C for one hour. A white crystal of o-$(C_6H_4)_3(COO)_6B_2$ was used, which was obtained in accordance with the method of A. Ictet und A. Gelenznoff, Ber., 36, 2219 (1903), i.e., by mixing phthalic anhydride and boric acid in a molar ratio of 3:2 and heating and melting to effect reaction. The resultant reaction mixture was then washed with refined toluene, to obtain a solid product. The solid product was treated with 42 g of $TiCl_4$ at 110°C for one hour, then washed with refined toluene to obtain 4.3 g of a solid catalyst component (A).

(2) Polymerization of propylene

In an induction stirring type 2-litre autoclave which was thoroughly replaced with refined argon gas, were added 0.5 mmol of triethylaluminum and 0.05 mmol of 2,2,6,6-tetramethylpiperidine at room temperature under argon seal. Then, $H_2$ was introduced at room temperature thereinto in such an amount that the pressure of $H_2$ was 0.3 kg/cm$^2$ and 700 g of liquid propylene was added. After adding 9 mg of the solid catalyst component (A) obtained above, the temperature was raised to 70°C and polymerization was carried out for one hour. Thereafter, the excess propylene was purged to obtain 353 g powdery polypropylene. The catalytic efficiency (CE) was 39200 g-PP/g-cat and polymerization activity (K) was 1310. II was 97.1 %, MFI was 3.4 showed a very narrow particle size distribution. Particles having a particle size of 250 to 500$\mu$m amounted to 98% of the whole powder. Minute particles having a particle size of less than 100$\mu$m amounted to 0.1%.

EXAMPLE 2:

Polymerization of propylene was carried out in the same manner as in Example 1(2), except for using 0.3 mmol of triethylaluminum, 0.03 mmol of 2,2,6,6-tetramethylpiperidine and 5.4 mg of the solid catalyst component obtained in Example 1 to produce a polypropylene having II of 97.3 %, MFI of 2.6 g/10min and $\rho_B$ of 0.44 g/cc. The catalytic efficiency (CE) was 35900 g-PP/g-cat and the polymerization activity (K) was 1200.

EXAMPLE 3:

Polymerization of propylene was carried out in the same manner as in Example 2 except for changing the polymerization time to 3 hours to obtain a polypropylene having II of 95.7 %, MFI of 3.1 g/10min and $\rho_B$ of 0.43 g/cc. The catalytic efficiency (CE) was 82800 g-PP/g-cat and the polymerization activity (K) was 920. The lowering in the polymerization activity during long-term polymerization was very slight.

EXAMPLE 4:

Polymerization of propylene was carried out in the same manner as in Example 1(2) except for 0.075 mmol of 2,2,6,6-tetramethylpiperidine to obtain a polypropylene having II of 97.2 %, MFI of 3.1 g/10min and $\rho_B$ of 0.45 g/cc. The catalytic efficiency (CE) was 46200 g-PP/g-cat and the polymerization activity (K) was 1540.

COMPARATIVE EXAMPLE 1:

(1) Production of the solid catalyst component (A)

The same procedure as in Example 1(1) was repeated except for using 1.3 g of ethyl benzoate as the electron donating compound (c) to obtain 4.8 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 49500 g-PP/g-cat, the polymerization activity (K) was 1650 and II was 77.6%.

COMPARATIVE EXAMPLE 2:

(1) Production of the solid catalyst component (A)

The same procedure as in Example 1(1) was repeated except for using 1.3 g of $(C_6H_5COO)_2AlOH$ as the electron donating compound (c) to obtain 4.9 g of a solid catalyst component (A).

(2) Polymerization of propylene

Polymerization was carried out in the same manner as in Example 1(2) except for using 9 mg of the solid catalyst component (A) obtained above, 0.15 mmol of methyl p-toluate and 1.1 kg/cm$^2$ of $H_2$ to obtain polypropylene. The catalytic efficiency was 22500 g-PP/g-cat, the polymerization activity (K) was 750 and II was 96.7 %.

COMPARATIVE EXAMPLE 3:

(1) Production of the solid catalyst component (A)

The same procedure as in Example 1(1) was repeated except for using 0.9 g of o-$C_6H_4$-$(COONa)_2$ as the electron donating compound (c) to obtain 6.1 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 21000 g-PP/g-cat, the polymerization activity (K) was 700 and II was 97.2 %.

EXAMPLE 5:

(1) Production of the solid catalyst component (A)

A 500 ml flask equipped with a stirrer and a thermometer was thoroughly replaced with refined $N_2$ gas, and then, were added therein 5 g of $Mg(OC_2H_5)_2$, 7.4 g of $Ti(OC_4H_9)_4$, 4.6 g of $Si(OC_2H_5)_4$, 0.75 g of o-$(C_6H_4)_3(COO)_6B_2$, a toluene solution of 8.2 g of phenol and 25 g of $TiCl_4$. The temperature was raised to 110°C and kept for one hour. The reaction mixture was washed with refined toluene to obtain a solid product. The solid product was treated with 42 g of $TiCl_4$ at 110°C for one hour, and then, thoroughly washed with refined toluene to obtain 5.1 g of a solid catalyst component (A).

(2) Polymerization of propylene

Polymerization was carried out in the same manner as in Example 1(2) using 9 mg of the solid catalyst component (A) obtained above to obtain polypropylene. The catalytic efficiency (CE) was 15000 g-PP/g-cat, the polymerization activity (K) was 500, II was 93.0 %, MFI was 8.3 g/10min and $\rho_B$ was 0.30 g/cc. The produced polypropylene showed a wide particle size distribution and the amount of minute particles having a particle size of less than 100 $\mu$m was 5.6 %.

EXAMPLE 6:

(1) Production of the solid catalyst component (A)

The same procedure as in Example 1(1) was repeated except for using 1.8 g of o-$C_6H_4[(COOGe(CH_3)_3]_2$ as the electron donating compound (c) to obtain 4.3 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 57000 g-PP/g-cat, the polymerization activity (K) was 1900 and II was 96.4%.

EXAMPLE 7:

(1) Production of the solid catalyst component (A)

The same procedure as in Example 1(1) was repeated except for using 3.1 g of o-$C_6H_4$-$(COOTiCl_3)_2$ as the electron donating compound (c) to obtain 4.4 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 39800 g-PP/g-cat, the polymerization activity (K) was 1330 and II was 97.7 %.

EXAMPLE 8:

(1) Polymerization of propylene

Polymerization was carried out in the same manner as in Example 1(2) except for using 9 mg of the solid catalyst component obtained in Example 6 and 0.05 mmol of $(C_6H_5)_2Si(OCH_3)_2$ as the electron donating compound (C) to obtain polypropylene. The catalytic efficiency (CE) was 31100 g-PP/g-cat, the polymerization activity (K) was 1040 and II was 98.3 %.

COMPARATIVE EXAMPLE 4:

(1) Production of the solid catalyst component (A)

The same procedure as in Example 1(1) was repeated except for using 1.2 g of o-$C_6H_4$-$(COOMgCl)_2$ as the electron donating compound (c) to obtain 5.7 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 44000 g-PP/g-cat, the polymerization activity (K) was 1470

and II was 92.5 %.

COMPARATIVE EXAMPLE 5:

(1) Production of the solid catalyst component (A)

The same procedure as in Example 1(1) was repeated except for using 0.97 g of diethyl phthalate as the electron donating compound (c) to obtain 5.1 g of a solid catalyst component (A).

(2) Polymerization of propylene

Polymerization was carried out in the same manner as in Example 1(2) using 9 mg of the solid catalyst component obtained above to obtain polypropylene. The catalytic efficiency (CE) was 27000 g-PP/g-cat, the polymerization activity (K) was 900 and II was 95.8 %.

## Claims

**1.** A process for producing an olefin polymer, which process comprises polymerizing an olefin or copolymerizing olefins in the presence of a catalyst comprising:

(A) a solid catalyst component obtained by reacting with heating a magnesium compound ($a_1$) represented by the following formula:

$$Mg(OR^1)_n(OR^2)_{2-n}$$

wherein $R^1$ and $R^2$ independently represent an alkyl group, an aryl group, or an aralkyl group and n represents a number satisfying $2 \geqq n \geqq 0$,

a titanium compound ($a_2$) represented by the following formula:

$$Ti(OR^3)_4$$

wherein $R^3$ represents an alkyl group, an aryl group, or an aralkyl group,

and a silicon compound ($a_3$) represented by the following formula:

$$Si(OR^4)_4$$

wherein $R^4$ represents an alkyl group, an aryl group, or an aralkyl group,

and subjecting the resultant reaction product (a) to contact treatment with a halogen-containing titanium compound (b) represented by the following formula:

$$TiX_m(OR^5)_{4-m}$$

wherein X represents a halogen, $R^5$ represents an alkyl group, an aryl group or an aralkyl group, and m represents a number satisfying $4 \geqq m \geqq 0$,

and an electron donating compound (c) represented by the following formula:

$$R^6{}_p(COO)_qM_rY_s$$

wherein $R^6$ represents an alkyl group, an aryl group or an aralkyl group, M represents Ti, B or Ge, Y represents a hydrocarbon group or an inorganic anion, g, r and s respectively represent a number not less than 0 satisfying the following equation:

$$rx = ys + q$$

wherein x represents the valence of M and y represents the valence of Y,

and p represents a number satisfying $p \geqq 1$;

(B) an organometallic compound of a metal of Group IA, IIA or IIIB of the Periodic Table; and

(C) an electron donating compound.

**2.** A process according to claim 1, wherein the reaction with heating of said magnesium compound ($a_1$), said titanium compound ($a_2$) and said silicon compound ($a_3$) is carried out in the presence of a compound ($a_4$) represented by the following formula:

$$R^7OH$$

wherein $R^7$ represents an alkyl group, an aryl group or an aralkyl group.

**3.** A process according to claim 2, wherein the compound ($a_4$) is used in an amount of 0.1 to 5 mole per mole of the compound ($a_1$).

**4.** A process according to claim 1, 2 or 3, wherein at least one of the compound ($a_1$), the compound ($a_2$), the compound ($a_3$) and, if present, the compound ($a_4$) has an aryloxy group.

**5.** A process according to any one of the preceding claims, wherein the magnesium compound ($a_1$) is a dialkoxy magnesium.

**6.** A process according to any one of the preceding claims, wherein the molar ratio of ($a_1$):($a_2$):-($a_3$) is 1:0.05 to 4:0.1 to 5.

**7.** A process according to any one of the preceding claims, wherein the molar ratio ($a_1$):(b):(c)

of the magnesium compound ($a_1$) in the reaction product (a), the halogen-containing compound (b), and the electron donating compound (c) is 1:0.1 to 100:0.01 to 10.

**8.** A process according to any one of the preceding claims, wherein said solid catalyst component (A) is obtained by
(i) subjecting the reaction product (a) and the halogen-containing compound (b) to contact treatment at a temperature of from -70 to 50 °C and then subjecting the resultant product to contact treatment with the electron donating compound (c) at a temperature of from 50 to 200 °C; or
(ii) subjecting the reaction product (a), the halogen-containing compound (b) and the electron donating compound (c) to simultaneous contact treatment at a temperature of from -70 to 50 °C and then heating the resultant product to a temperature of from 50 to 200 °C.

**9.** A process according to any one of the preceding claims, wherein said organometallic compound (B) is represented by the following formula:

$$AlR^8_{m'}X_{3-m'}$$

wherein $R^8$ represents a hydrocarbon group of from 1 to 20 carbon atoms, X represents a halogen atom, and m'represents a number in the range of 2 to 3.

**10.** A process according to any one of the preceding claims, wherein the molar ratio (A):(B):(C) of the solid catalyst component (A), the organometallic compound (B) and the electron donating compound (C) is 1:3 to 1,000:0.1 to 100.

**11.** A process for the preparation of a solid catalyst component, which process comprises preparing the solid catalyst component (A) referred to in claim 1 by the process for the preparation therefor defined in claim 1.

**12.** A catalyst comprising the solid catalyst component (A), the organometallic component (B) and the electron donating compound (C) defined in claim 1.

**Patentansprüche**

**1.** Verfahren zur Herstellung eines Olefinpolymers, das die Polymerisation eines Olefins oder die Copolymerisation von Olefinen in Gegenwart eines Katalysators umfaßt, der enthält:
(A) eine feste Katalysatorkomponente, die erhalten wird durch Umsetzung unter Erwärmen einer Magnesiumverbindung ($a_1$), die durch die folgende Formel dargestellt ist:

$$Mg(OR^1)_n(OR^2)_{2-n} ,$$

worin $R^1$ und $R^2$ unabhängig eine Alkylgruppe, eine Arylgruppe oder eine Aralkylgruppe darstellen, und n eine Zahl, die die Relation $2 \geqq n \geqq 0$ erfüllt, darstellt,
einer Titanverbindung ($a_2$), die durch die folgende Formel dargestellt ist:

$$Ti(OR^3)_4 ,$$

worin $R^3$ eine Alkylgruppe, eine Arylgruppe oder eine Aralkylgruppe darstellt, und
einer Siliciumverbindung ($a_3$), die durch die folgende Formel dargestellt ist:

$$Si(OR^4)_4 ,$$

worin $R^4$ eine Alkylgruppe, eine Arylgruppe oder eine Aralkylgruppe darstellt,
und Kontaktbehandlung des sich ergebenden Umsetzungsprodukts (a) mit einer Halogen enthaltenden Titanverbindung (b), die durch die folgende Formel dargestellt ist:

$$TiX_m(OR^5)_{4-m} ,$$

worin X ein Halogen darstellt, $R^5$ eine Alkylgruppe, eine Arylgruppe oder eine Aralkylgruppe darstellt, und m eine Zahl, die die Relation $4 \geqq m \geqq 0$ erfüllt, darstellt,
und einer Elektronen abgebenden Verbindung (c), die durch die folgende Formel dargestellt ist:

$$R^6{}_p(COO)_qM_rY_s ,$$

worin $R^6$ eine Alkylgruppe, eine Arylgruppe oder eine Aralkylgruppe darstellt, M Ti, B oder Ge darstellt, Y eine Kohlenwasserstoffgruppe oder ein anorganisches Anion darstellt, q, r und s jeweils eine Zahl von nicht Weniger als 0 darstellen, die die folgende Gleichung erfüllen:

$$rx = ys + q ,$$

worin x die Wertigkeit von M, und y die Wertigkeit von Y darstellt, und p eine Zahl mit $p \geqq 1$ darstellt;
(B) eine Organometall-Verbindung eines Metalls der Gruppe IA, IIA oder IIIB des

Periodensystems, und
(C) eine Elektronen abgebende Verbindung.

2. Verfahren gemäß Anspruch 1, worin die Umsetzung unter Erwärmen der Magnesiumverbindung ($a_1$), der Titanverbindung ($a_2$) und der Siliciumverbindung ($a_3$) in Gegenwart einer Verbindung ($a_4$) durchgeführt wird, die durch die folgende Formel dargestellt ist:

$R^7OH$ ,

worin $R^7$ eine Alkylgruppe, eine Arylgruppe oder eine Aralkylgruppe darstellt.

3. Verfahren gemäß Anspruch 2, worin die Verbindung ($a_4$) in einer Menge von 0,1 bis 5 Mol pro Mol der Verbindung ($a_1$) verwendet wird.

4. Verfahren gemäß Anspruch 1, 2 oder 3, worin mindestens eine der Verbindungen ($a_1$), ($a_2$), ($a_3$) und, falls vorhanden, der Verbindung ($a_4$) eine Aryloxygruppe aufweist.

5. Verfahren gemäß einem der vorhergehenden Ansprüche, worin die Magnesiumverbindung ($a_1$) ein Dialkoxymagesium ist.

6. Verfahren gemäß einem der vorhergehenden Ansprüche, worin das Molverhältnis ($a_1$) : ($a_2$) : ($a_3$) 1:0,05 bis 4:0,1 zu 5 beträgt.

7. Verfahren gemäß einem der vorhergehenden Ansprüche, worin das Molverhältnis ($a_1$): (b): (c) der Magnesiumverbindung ($a_1$) im Umsetzungsprodukt (a), der Halogen enthaltenden Verbindung (b) und der Elektronen abgebenden Verbindung (c) 1:0,1 bis 100:0,01 zu 10 beträgt.

8. Verfahren gemäß einem der vorhergehenden Ansprüche, worin die feste Katalysatorkomponente (A) erhalten wird durch
(i) Kontaktbehandlung des Umsetzungsprodukts (a) und der Halogen enthaltenden Verbindung (b) bei einer Temperatur von -70 bis 50 °C und anschließende Kontaktbehandlung des resultierenden Produkts mit der Elektronen abgebenden Verbindung (c) bei einer Temperatur von 50 bis 200 °C, oder
(ii) gleichzeitige Kontaktbehandlung des Umsetzungsprodukts (a), der Halogen enthaltenden Verbindung (b) und der Elektronen abgebenden Verbindung (c) bei einer Temperatur von -70 bis 50 °C und anschließendes Erwärmen des resultierenden Produkts auf eine Temperatur von 50 bis 200 °C.

9. Verfahren gemäß einem der vorhergehenden Ansprüche, worin die Organometall-Verbindung (B) durch die folgende Formel dargestellt ist:

$AlR^8_{m'}X_{3-m'}$ ,

worin $R^8$ eine Kohlenwasserstoffgruppe mit 1 bis 20 Kohlenstoffatomen darstellt, X ein Halogenatom darstellt und m' eine Zahl im Bereich von 2 bis 3 darstellt.

10. Verfahren gemäß einem der vorhergehenden Ansprüche, worin das Molverhältnis (A) : (B) : (C) der festen Katalysatorkomponente (A), der Organometall-Verbindung (B) und der Elektronen abgebenden Verbindung (C) 1:3 bis 1000:0,1 zu 100 beträgt.

11. Verfahren zur Herstellung einer festen Katalysatorkomponente, das die Herstellung der festen Katalysatorkomponente (A) auf die in Anspruch 1 Bezug genommen wird, durch das in Anspruch 1 definierte Verfahren zu ihrer Herstellung umfaßt.

12. Katalysator, der die feste Katalysatorkomponente (A), die Organometall-Komponente (B) und die Elektronen abgebende Verbindung (C), wie in Anspruch 1 definiert, enthält.

## Revendications

1. Procédé pour la production d'un polymère d'oléfines, lequel procédé comprend la polymérisation d'une oléfine ou la copolymérisation d'oléfines en présence d'un catalyseur comprenant :
(A) un composant catalytique solide obtenu par réaction avec chauffage
d'un composé du magnésium ($a_1$) représenté par la formule suivante :

$Mg(OR^1)_n(OR^2)_{2-n}$

dans laquelle $R^1$ et $R^2$ représentent indépendamment un groupe alkyle, un groupe aryle ou un groupe aralkyle et $\underline{n}$ représente un nombre satisfaisant à la condition $2 \geqq \underline{n} \geqq 0$,
d'un composé du titane ($a_2$) représenté par la formule suivante :

$Ti(OR^3)_4$

dans laquelle $R^3$ représente un groupe alkyle, un groupe aryle ou un groupe aralkyle,

et d'un composé du silicium ($a_3$) représenté par la formule suivante :

$Si(OR^4)_4$

dans laquelle $R^4$ représente un groupe alkyle, un groupe aryle ou un groupe aralkyle,

et la soumission du produit réactionnel résultant (a) à un traitement par contact avec :

un composé (b) du titane contenant de l'halogène représenté par la formule suivante :

$TiX_m(OR^5)_{4-m}$

dans laquelle X est un atome d'halogène, $R^5$ représente un groupe alkyle, un groupe aryle ou un groupe aralkyle et m représente un nombre satisfaisant à la condition $4 \geqq m \geqq 0$,

et un composé électrodonneur (c) représenté par la formule suivante :

$R^6{}_p(COO)_qM_rY_s$

dans laquelle $R^6$ représente un groupe alkyle, un groupe aryle ou un groupe aralkyle, M représente Ti, B ou Ge, Y représente un groupe hydrocarboné ou un anion inorganique, q, r et s représentent respectivement un nombre d'au moins 0 satisfaisant à l'équation suivante :

$$rx = ys + q$$

dans laquelle x représente la valence de M et y représente la valence de Y, et p représente un nombre satisfaisant à la condition $p \geqq 1$;

(B) un composé organométallique d'un métal des groupes IA, IIA ou IIIB du tableau périodique; et

(C) un composé électrodonneur.

**2.** Procédé suivant la revendication 1, dans lequel la réaction avec chauffage de ce composé du magnésium ($a_1$), de ce composé du titane ($a_2$) et de ce composé du silicium ($a_3$) est effectuée en présence d'un composé ($a_4$) représenté par la formule suivante :

$R^7OH$

dans laquelle $R^7$ représente un groupe alkyle, un groupe aryle ou un groupe aralkyle.

**3.** Procédé suivant la revendication 2, dans lequel le composé ($a_4$) est utilisé en une quantité de 0,1 à 5 moles par mole du composé ($a_1$).

**4.** Procédé suivant l'une quelconque des revendications 1, 2 ou 3, dans lequel au moins l'un du composé ($a_1$), du composé ($a_2$), du composé ($a_3$) et s'il est présent, du composé ($a_4$), comprend un groupe aryloxy.

**5.** Procédé suivant l'une quelconque des revendications précédentes, dans lequel le composé du magnésium ($a_1$) est un dialcoxy magnésium.

**6.** Procédé suivant l'une quelconque des revendications précédentes, dans lequel le rapport molaire de ($a_1$) : ($a_2$) : ($a_3$) est de 1 : 0,05 à 4 : 0,1 à 5.

**7.** Procédé suivant l'une quelconque des revendications précédentes, dans lequel le rapport molaire de ($a_1$) : (b) : (c) du composé du magnésium ($a_1$) dans le produit réactionnel (a), du composé (b) contenant de l'halogène et du composé électrodonneur (c) est de 1 : 0,1 à 100 : 0,01 à 10.

**8.** Procédé suivant l'une quelconque des revendications précédentes, dans lequel ce composant catalytique solide (A) est obtenu par :

(i) soumission du produit réactionnel (a) et du composé (b) contenant de l'halogène à un traitement par contact à une température comprise entre -70 °C et 50 °C et ensuite soumission du produit résultant à un traitement par contact avec le composé électrodonneur (c) à une température comprise entre 50 °C et 200 °C;

(ii) soumission du produit réactionnel (a), du composé (b) contenant de l'halogène et du composé électrodonneur (c) à un traitement par contact simultané à une température comprise entre -70 °C et 50 °C et ensuite chauffage du produit résultant à une température comprise entre 50 °C et 200 °C.

**9.** Procédé suivant l'une quelconque des revendications précédentes, dans lequel ce composant organométallique (B) est représenté par la formule suivante :

$AlR^8{}_{m'}X_{3-m'}$

dans laquelle $R^8$ représente un groupe hydrocarboné de 1 à 20 atomes de carbone, X représente un atome d'halogène, et m' représente un nombre dans la gamme de 2 à 3.

**10.** Procédé suivant l'une quelconque des revendications précédentes, dans lequel le rapport molaire de (A) : (B) : (C) du composé catalytique solide (A), du composé organométallique (B) et du composé électrodonneur (C) est de 1 : 3 à 1.000 : 0,1 à 100.

**11.** Procédé pour la préparation d'un composant catalytique solide, qui comprend la préparation du composant catalytique solide (A) auquel il est fait référence dans la revendication 1 par le procédé pour sa préparation suivant la revendication 1.

**12.** Catalyseur comprenant le composant catalytique solide (A), le composant organométallique (B) et le composé électrodonneur (C) définis suivant la revendication 1.